(19) Europäisches Patentamt
European Patent Office
Office européen des brevets

(11) **EP 4 651 419 A1**

(12) **EUROPEAN PATENT APPLICATION**
published in accordance with Art. 153(4) EPC

(43) Date of publication:
**19.11.2025 Bulletin 2025/47**

(21) Application number: **24741703.3**

(22) Date of filing: **10.01.2024**

(51) International Patent Classification (IPC):
**H04L 5/00** (2006.01)  **H04W 72/232** (2023.01)
**H04B 7/0456** (2017.01)

(52) Cooperative Patent Classification (CPC):
**H04B 7/0456; H04L 5/00; H04W 72/232**

(86) International application number:
**PCT/KR2024/000497**

(87) International publication number:
**WO 2024/151082 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 KR 20230005720
10.02.2023 KR 20230017757**

(71) Applicant: **LG Electronics Inc.**
**Yeongdeungpo-gu**
**Seoul 07336 (KR)**

(72) Inventors:
• **KIM, Hyungtae**
  **Seoul 06772 (KR)**
• **KANG, Jiwon**
  **Seoul 06772 (KR)**
• **PARK, Haewook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING PUSCH IN WIRELESS COMMUNICATION SYSTEM**

(57)    Disclosed are a method and device for transmitting and receiving a PUSCH in a wireless communication system. The method, according to one embodiment of the present disclosure, comprises the steps of: receiving, from a base station, configuration information related to a PUSCH transmission, the configuration information comprising, with respect to multi-panel PUSCH transmission, first information for setting the maximum number of layers for a first panel and second information for setting the maximum number of layers for a second panel; receiving DCI from the base station, the DCI comprising an SRS resource set indicator field, a first precoding-related field, and a second precoding-related field; and transmitting the multi-panel PUSCH to the base station on the basis of the value of the SRS resource set indicator field in the DCI.

FIG.8

```
Receive configuration information related to    ~ S801
PUSCH transmission

            ↓

Receive downlink control information    ~ S802

            ↓

Transmit multi-panel PUSCH transmission    ~ S803
```

**Description**

[Technical Field]

The present disclosure relates to a wireless communication system, and in more detail, relates to a method and an apparatus of transmitting and receiving a PUSCH (physical uplink shared channel) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving a PUSCH (physical uplink shared channel).

In addition, an additional technical object of the present disclosure is to provide a method and an apparatus for scheduling PUSCH transmission through multiple panels.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving configuration information related to PUSCH (physical uplink shared channel) transmission from a base station, wherein the configuration information includes first information for configuring a maximum number of layers for a first panel and second information for configuring a maximum number of layers for a second panel for multi-panel PUSCH transmission; receiving downlink control information (DCI) from the base station, wherein the DCI includes a sounding reference signal (SRS) resource set indicator field, a first precoding-related field, and a second precoding-related field; and based on a value of the SRS resource set indicator field of the DCI, transmitting the multi-panel PUSCH transmission to the base station. A size of the first precoding-related field is determined to be greater than or equal to a maximum value of a value of the first information and a value of the second information, and a size of the second precoding-related field is determined based on either the value of the first information or the value of the second information.

A method performed by a base station according to an additional aspect of the present disclosure may include: transmitting configuration information related to PUSCH (physical uplink shared channel) transmission to a user equipment (UE), wherein the configuration information includes first information for configuring a maximum number of layers for a first panel and second information for configuring a maximum number of layers for a second panel for multi-panel PUSCH transmission; transmitting downlink control information (DCI) to the UE, wherein the DCI includes a sounding reference signal (SRS) resource set indicator field, a first precoding-related field, and a second precoding-related field; and based on a value of the SRS resource set indicator field of the DCI, receiving the multi-panel PUSCH transmission from the UE. A size of the first precoding-related field is determined to be greater than or equal to a maximum value of a value of the first information and a value of the second information, and a size of the second precoding-related field is determined based on either the value of the first information or the value of the second information.

[Technical Effects]

According to an embodiment of the present disclosure, in PUSCH transmission through multiple panels, the number of layers for PUSCH transmission can be individually supported for each panel.

In addition, according to an embodiment of the present disclosure, signaling overhead for downlink control information for scheduling PUSCH transmission through multiple panels can be reduced.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a signaling procedure between a network and a UE for a PUSCH transmission and reception method according to an embodiment of the present disclosure.

FIG. 8 illustrates a an operation of a UE for a PUSCH transmission and reception method according to an embodiment of the present disclosure.

FIG. 9 illustrates an operation of a base station for a PUSCH transmission and reception method according to an embodiment of the present disclosure.

FIG. 10 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI (Artificial Intelligence) system/module, an RSU(road side unit), a robot, a drone (UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access

- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

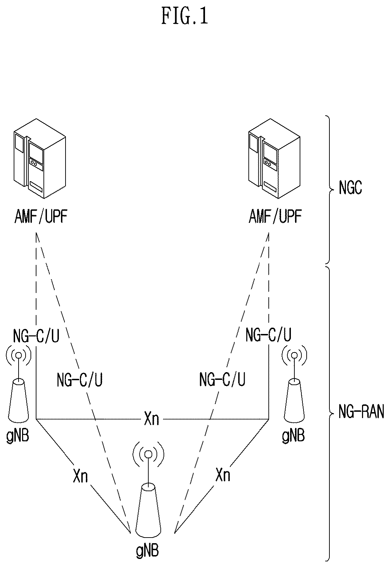

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

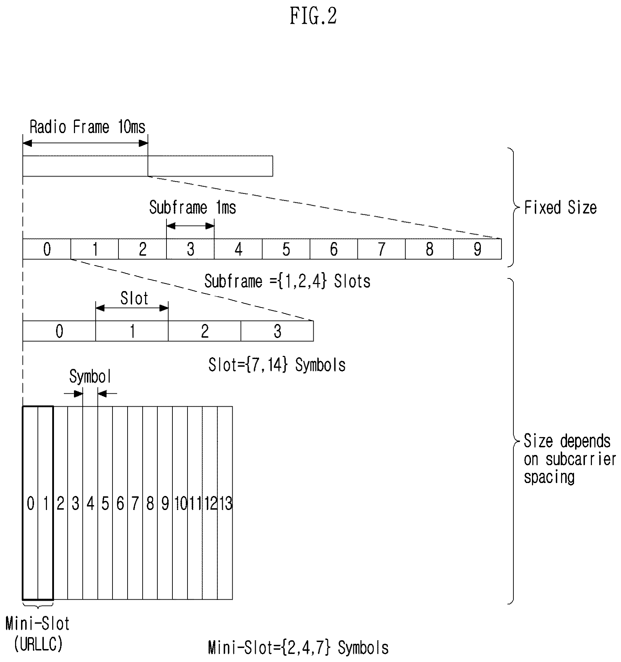

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^{\mu} \in \{0, ..., N_{slot}^{subframe,\mu}-1\}$ in a subframe and are numbered in an increasing order of $n_{s,f}^{\mu} \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

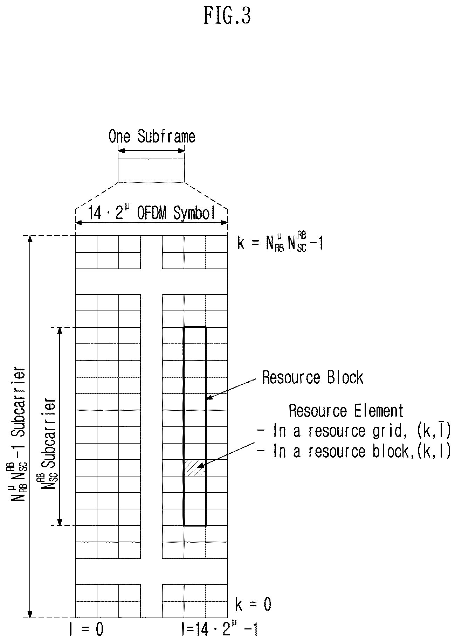

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

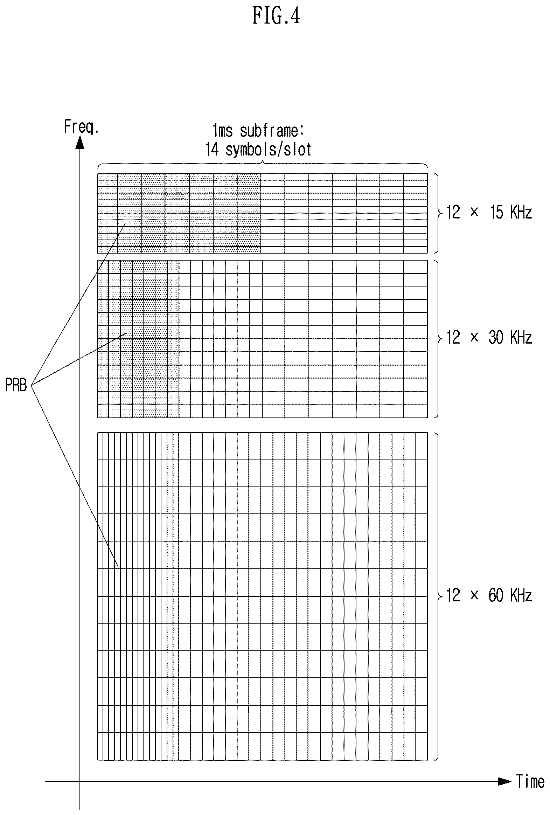

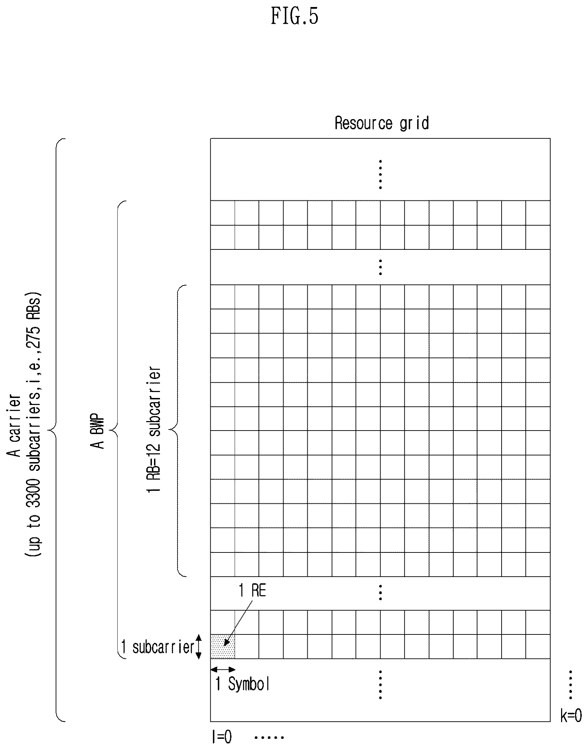

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

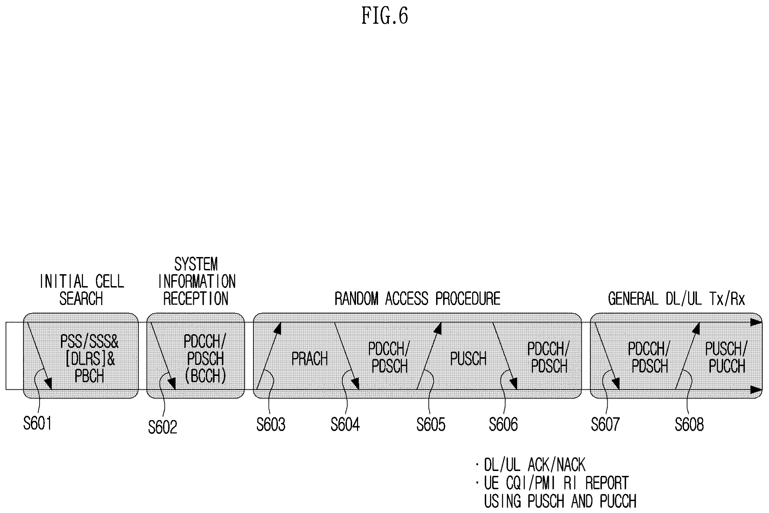

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(guasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission (JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

The Rel-17 NR standard supports (1) MTRP PDCCH repeat transmission, (2) MTRP PDCCH single frequency network (SFN) transmission, (3) MTRP PDSCH SFN transmission, (4) MTRP PUSCH repeat transmission based on S-DCI, and (4) MTRP PUCCH repeat transmission based on single PUCCH resource. All of these transmission techniques are URLLC target enhancements for increasing reliability, and the same contents (i.e., DCI or UL/DL TB or UCI) are repeatedly transmitted. In the case of MTRP PDCCH repeat transmission, it is repeatedly transmitted in TDM or FDM, MTRP PDCCH/PDSCH SFN is repeatedly transmitted at the same time/frequency/layer, S-DCI-based MTRP PUSCH repeat transmission is repeatedly transmitted in TDM, and single PUCCH resource-based MTRP PUCCH repeat transmission is repeatedly transmitted in TDM.

(1) MTRP PDCCH Repeat Transmission

For MTRP PDCCH repeat transmission, multiple CORESETs with different TCI states (i.e., different QCL RSs) are configured to a UE, and multiple SS sets each connected/associated to the corresponding CORESETs are configured to the UE. A base station indicates/configures a UE that a search space set (SS set) associated to one CORESET and an SS set associated to another CORESET are linked for repeat transmission, so that the UE can know that PDCCH candidates of the corresponding SS set are repeatedly transmitted.

For example, it is assumed that two CORESETs, CORESET 0 and 1, are configured to a UE, and CORESET 0 and 1 are associated to SS set 0 and 1, respectively, and that SS set 0 and 1 are linked. The UE can recognize that a PDCCH candidate of SS set 0 and a PDCCH candidate of SS set 1 are repeatedly transmitting the same DCI, and through a specific rule, and the UE can recognize that a specific PDCCH candidate of SS set 0 and a specific PDCCH candidate of SS set 1 are a pair established for repeatedly transmitting the same DCI. These two PDCCH candidates are referred to as linked PDCCH candidates, and a UE can successfully decode the corresponding DCI if it correctly receives either of the two PDCCH candidates. However, when receiving the PDCCH candidate of SS set 0, a QCL RS (i.e., DL beam) of a TCI state of COERSET 0 associated to SS set 0 is used, and when receiving the PDCCH candidate of SS set 1, a QCL RS (i.e., DL beam) of a TCI state of COERSET 1 associated to SS set 1 is used, thereby receiving the linked PDCCH candidates with different beams.

(2) MTRP SFN PDCCH Repeat Transmission

As a special case of MTRP PDCCH repeat transmission, multiple TRPs can repeatedly transmit the same DCI through the same time/frequency/DMRS port, which can be referred to as SFN PDCCH transmission. However, for SFN PDCCH transmission, instead of configuring multiple CORESETs with different TCI states to a UE, a base station sets multiple TCI states to one CORESET. When a UE receives a PDCCH candidate through a SS set associated to one CORESET, it performs channel estimation of a PDCCH DMRS using all of the multiple TCI states and attempts to decode.

(3) MTRP SFN PDSCH Repeat Transmission

When the MTRP PDSCH is repeatedly transmitted, two TRPs repeatedly transmit a corresponding PDSCH on different resources. However, as a special case, if a resource used by two TRPs are the same, that is, if the same channel is repeatedly transmitted through the same frequency, time, and layer (i.e., DMRS port), the reliability of the corresponding channel can be improved. In this case, the same channel that is repeatedly transmitted is received by combining it in the air because the resources are not distinguished, so it is recognized as one channel from the receiver's perspective. For PDSCH SFN transmission, two DL TCI states for PDSCH DMRS reception can be configured.

(4) S-DCI based MTRP PUSCH repeat transmission

For S-DCI based MTRP PUSCH transmission, a base station configured two SRS sets to the UE, where each set is used to indicate a UL Tx port and UL beam/QCL information toward TRP 1 and TRP 2, respectively. In addition, a base station performs SRS resource indication for each SRS set through two SRI fields in one DCI, and can indicate up to two power control (PC) parameter sets. For example, the first SRI field can indicate an SRS resource and a PC parameter set defined in SRS set 0, and the second SRI field can indicate an SRS resource and a PC parameter set defined in SRS set 1. A UE is indicated with UL Tx port, PC parameter set, and UL beam/QCL information toward TRP 1 through the first SRI field, and performs PUSCH transmission at the transmission occasion (TO) corresponding to SRS set 0 through these. Similarly, a UE is indicated with UL Tx port, PC parameter set, and UL beam/QCL information toward TRP 2 through the second SRI field, and performs PUSCH transmission in the TO corresponding to SRS set 1. Similarly, a UE is instructed with the UL Tx port, PC parameter set, and UL beam/QCL information toward TRP 2 through the second SRI field, and performs PUSCH transmission in the TO corresponding to SRS set 1. Here, the TO corresponding to SRS set 0,1 is determined by one of the mapping methods configured by a base station among cyclic (beam) mapping and sequential (beam) mapping. For example, in the case of cyclic beam mapping, SRS set 0 and SRS set 1 are mapped alternately in TO order. For example, if TO=4, TOs 1,2,3,4 are mapped to SRS sets 0, 1, 0, 1, respectively. On the other hand, sequential beam mapping maps one SRS set to two adjacent TOs, and then another SRS set to the next two adjacent TOs. For example, when TO=8, TOs 1,2,3,4,5,6,7,8 are mapped to SRS sets 0,0, 1,1, 0,0, 1,1, respectively. This mapping method is also applied to PUCCH repetition.

In addition to a SRI field, transmit PMI (TPMI), phase tracking reference signal (PTRS), and transmission power control (TPC) fields can also be indicated for each TRP, so that the existing one field has been expanded to two fields. In addition, by introducing a 2-bit SRS resource set indication field, STRP PUSCH repeat transmission can be performed by selecting a specific one of the two SRS sets, and MTRP PUSCH repeat transmission can be performed by selecting both. That is, if the field is 00, 01, SRS set 0 and SRS set 1 are indicated respectively, and STRP PUSCH transmission corresponding to each SRS set is performed, and if it is 10, (SRS set 0, SRS set 1) is indicated, and MTRP PUSCH transmission is performed in the indicated order of SRS set pairs. That is, set 0 corresponds to the first PUSCH TO. In the case of 11, (SRS set 1, SRS set 0) is indicated, and MTRP PUSCH transmission is performed in the order in which the set pairs are indicated. That is, set 1 corresponds to the first PUSCH TO.

(5) MTRP PUCCH repeated transmission based on a single PUCCH resource

A base station activates/configures two spatial relation information in a single PUCCH resource for a UE for MTRP PUCCH transmission based on a single PUCCH resource. In this case, two PC (power control) parameter sets can be activated/configured in the case of FR1. When a UE transmits UL UCI through the corresponding PUCCH resource, each spatial relation info is used to indicate spatial relation info toward TRP 1 and TRP 2, respectively. For example, a UE is indicated Tx beam/PC parameters toward TRP 1 through a value indicated in a first spatial relation info, and the UE performs PUCCH transmission in a TO corresponding to TRP 1 using this information. Similarly, a UE is indicated Tx beam/PC parameters toward TRP 2 through a value indicated in a second spatial relation info, and the UE performs PUCCH transmission in a TO corresponding to TRP 2 using this information.

In addition, for MTRP PUCCH repeat transmission, a configuration method has been improved so that two spatial relation info can be configured in the PUCCH resource. That is, if PC parameters such as PLRS, Alpha, P0, and Closed loop index are set for each spatial relation info, spatial relation RS can be configured. As a result, PC information and spatial relation RS information corresponding to two TRPs can be configured through two spatial relation info, UE transmits UCI (i.e., CSI, HARQ-ACK, scheduling request (SR)) in a PUCCH using the first spatial relation info in TO 1, and transmits the same UCI (i.e., CSI, HARQ-ACK, SR) in a PUCCH using the second spatial relation info in TO 2. In the present disclosure, a PUCCH resource with two spatial relation information set is referred to as an MTRP PUCCH resource, and a PUCCH resource with one spatial relation information set is referred to as a STRP PUCCH resource.

In the methods proposed in this disclosure, using (/mapping) a specific TCI state (or TCI) when receiving data/DCI/UCI for a certain frequency/time/space resource may mean that in the case of DL, a channel is estimated from a DMRS using a QCL type and QCL RS indicated by a corresponding TCI state in the frequency/time/space resource, and data/DCI is received/demodulated with the estimated channel. In the case of UL, it can mean that a DMRS and data/UCI are transmitted/modulated using a Tx beam and/or Tx power indicated by a corresponding TCI state in the frequency/-time/space resource.

The UL TCI state includess Tx beam and/or Tx power information of a UE, and may be configured for the UE through other parameters such as spatial relation info instead of a TCI state. A UL TCI state may be directly indicated in UL grant DCI, or may mean spatial relation info of an SRS resource indicated through an SRS resource indicator (SRI) field of UL grant DCI. Alternatively, it may mean an open loop (OL) Tx power control parameter (j: index for open loop parameter Po and alpha (up to 32 parameter value sets per cell), q_d: index of DL RS for path loss (PL) measurement (up to 3 measurements per cell), l: closed loop power control process index (up to 2 processes per cell)) linked to a value indicated via an SRI field of UL grant DCI.

In addition, in Rel-17, not only a DL TCI state but also a UL TCI state can be indicated through DL DCI (e.g., DCI format 1-1 or 1-2), or only a UL TCI state can be indicated without a DL TCI state indication. Therefore, the methods used for UL beam and PC (power control) configuration in existing Rel-15/16 are replaced in R-17 with the UL TCI state indication method. More specifically, in R17, one UL TCI state can be indicated through a TCI field of DL DCI, and the corresponding UL TCI state is applied to all PUSCHs and all PUCCHs after a certain time called beam application time, and can be applied to some or all of the indicated SRS resource sets.

Meanwhile, Rel-18 discusses a method for UEs to simultaneously transmit multiple channels/reference signals (RS) of the same type or multiple channels/RSs of different types. In the case of existing UEs, an operation of transmitting multiple channels/RS at one time is restricted (e.g., it is possible to simultaneously transmit multiple SRS resources of different SRS sets for UL beam measurement, but it is impossible to simultaneously transmit multiple PUSCHs), however in the case of advanced UEs in the future, this restriction will be relaxed and multiple channels or RSs can be transmitted simultaneously using multiple transmission panels, and this transmission method can be referred to as simultaneous transmission across multiple panels (STxMP), and such UEs can also be referred to as STxMP UEs. For example, two PUSCHs corresponding to two UL TBs are scheduled on the same resource, and spatial relation RS 1 and PC parameter set 1 (i.e., UL TCI state 1) and spatial relation RS 2 and PC parameter set 2 (i.e., UL TCI state 2) can be configured for PUSCH 1 and 2 transmission, respectively. In this case, a UE can transmit PUSCH 1 using panel 1 corresponding to UL TCI state 1, and simultaneously transmit PUSCH 2 using panel 2 corresponding to UL TCI state 2.

When a base station schedules a PUSCH through DCI, it can indicate whether the PUSCH will be transmitted as STxMP, single panel, MTRP PUSCH repetition, etc. Of course, a UE must have STxMP capability and the STxMP mode must be enabled in advance through RRC signaling, etc. For this purpose, the existing SRS resource set indication field can be redefined and used, or a new DCI field can be introduced.

For convenience of explanation, this disclosure assumes cooperative transmission/reception between 2 TRPs and applies the proposed method, but it can be expanded to a multi-TRP environment of 3 or more, and can be expanded to a multi-panel environment. Different TRPs can be recognized by a UE as different TCI states, and when a UE receives/transmits data/DCI/UCI using TCI state 1, it means that the UE receives/transmits data/DCI/UCI from/to TRP 1.

In the present disclosure, a transmission occasion (TO) may mean each channel transmitted at a different time when multiple channels are TDMed, or each channel transmitted on a different frequency/RB when FDMed, or each channel transmitted on a different layer/beam/DMRS port when SDMed. One TCI state may be mapped to each TO. When the same channel is repeatedly transmitted, a complete DCI/data/UCI is transmitted to one TO, and a receiving end may receive multiple TOs to increase the reception success rate.

## Multi-TB PUSCH/PDSCH scheduling based on single DCI (SDCI)

In Rel-17 NR, a method is supported in which single DCI schedules multiple PUSCH/PDSCHs simultaneously in ultra-high frequency bands (e.g., beyond 5.26 GHz). For example, multiple TDRAs (=TOs) can be indicated at once through the time domain resource assignment (TDRA) field of the PUSCH scheduling DCI, and different TBs can be transmitted through the PUSCH for each TO. In this case, the frequency domain resource assignment (FDRA), modulation and coding scheme (MCS), transmit precoding matrix indicator (TPMI) (or precoding information and number of layers), and sounding resource indicator (SRI) values of the corresponding DCI can be commonly applied to multiple scheduled TBs. In addition, a new data indicator (NDI) and a redundancy version (RV) for each TB can be individually indicated through the DCI, and although a single value is indicated for the HARQ process number, the HARQ process number can increase sequentially in TO (time) order based on the initial TO.

## Simultaneous transmission across multi-panel (STxMP)

In Rel-18, the introduction of a method for UEs to simultaneously transmit multiple channels/reference signals (RSs) of the same type or multiple channels/RSs of different types is being discussed. In the case of existing UEs, the operation of transmitting multiple channels/RSs at one time (i.e., the same time resource) is restricted (for example, it is possible to simultaneously transmit multiple SRS resources of different SRS resource sets for UL beam measurement, however it is impossible to simultaneously transmit multiple PUSCHs), however this restriction may be relaxed in the case of advanced UEs in the future, and advanced UEs in the future may simultaneously transmit multiple channels or RSs using multiple transmit panels. This operation may be referred to as simultaneous transmission across multi-panel (STxMP), and a UE supporting this operation may be referred to as an STxMP UE. For example, two PUSCHs (PUSCH 1, 2) corresponding to (carrying) two UL TBs may be scheduled in the same resource element (RE) (or multiple identical REs), and spatial relation RS 1 and power control (PC) parameter set 1 (i.e., UL TCI state 1) and spatial relation RS 2 and PC parameter set 2 (i.e., UL TCI state 2) may be configured for transmission of PUSCH 1 and 2, respectively. The UE may simultaneously transmit PUSCH 1 using panel 1 corresponding to UL TCI state 1, and transmit PUSCH 2 using panel 2 corresponding to UL TCI state 2.

When scheduling a PUSCH through DCI, the base station can indicate whether the PUSCH will be transmitted as STxMP, as a single panel, or as M-TRP PUSCH repetitions. In this case, the UE must have STxMP capability, and the STxMP mode (e.g., SDM scheme/mode or SFN scheme/mode) may be enabled in advance through higher layer signaling (e.g., RRC signaling). For this purpose, the existing SRS resource set indication field may be redefined and used, or a new DCI field may be introduced.

Two methods are being considered for the Rel-18 STxMP transmission technique: single frequency network (SFN) and spatial division multiplexing (SDM).

The SFN method is a method in which the same channel (or RS) transmitted by one panel is transmitted by another panel. However, since the UL channel (or RS) of each panel is different, it is transmitted by a different precoder, different transmission power, and different transmission beam (i.e., spatial relation RS indicated by UL TCI) for each panel in consideration of this.

The SDM method is a method that can be transmitted from rank 2 or higher, in which some of the multi-layers are transmitted by panel 1 and the remaining layers are transmitted by panel 2. For example, in 2-layer transmission, the first layer can be transmitted by panel 1 and the second layer can be transmitted by panel 2. In this case, since the UL channels of each panel are different, different precoder, different transmission power, and different transmission beam (i.e., spatial relation RS indicated by UL TCI) are used for transmission by panel.

Method for scheduling STxMP transmission

The following was agreed in the 3GPP meeting regarding STxMP:
For dynamic switching between single DCI-based STxMP PUSCH and SDM mode of sTRP (single TRP) transmission:

- Dynamically indicating sTRP or SDM transmission using the 2-bit "SRS resource set indicator" field of the DCI.

For the maximum number of layers for sTRP transmission, the following are selected:

- Option 1: The maximum number of layers for sTRP transmission can be configured by the maxRank (or Lmax) of the current specification.
- Option 2: In addition to the maxRank of the current specification, a maximum number of layers for one additional sTRP transmission may be set.

For the maximum number of layers for SDM transmission, the following are selected:

- Alt (alternative) 1: A single maximum number of layers (separate from the maximum number of layers of sTRP) may be configured, which applies separately to a first SRS resource set and a second SRS resource set.
- Alt 2: The maxRank (or Lmax) of the current specification may also apply separately to a first SRS resource set and a second SRS resource set.
- Alt 3: There is no dedicated configuration for SDM, and the maximum number of layers of sTRP and the UE capability report for SDM may be used to determine the maximum number of layers of SDM transmission.
- Alt 4: The maximum number of layers of the above options 1/2 can be applied separately to a first SRS resource set and a second SRS resource set.

As in the above agreement, STxMP transmission or sTRP transmission can be indicated by the SRS resource set indicator field of DCI. Here, as described above, for configuring STxMP transmission, the STxMP mode/method (e.g., SDM mode/mode or SFN mode/mode) can be configured by higher layer signaling, and STxMP transmission can be indicated by the SRS resource set indicator field in the state where the STxMP mode/method is configured. The uplink transmission (e.g., PUSCH) scheduled by the DCI including the SRS resource set indicator field indicating STxMP transmission can be referred to as STxMP uplink transmission or multi-panel uplink transmission.

For example, when a value of the SRS resource set indicator field is 00 or 01, sTRP transmission may be indicated. In this case, even if two transmit precoding matrix indicators (TPMIs) are given by two precoding information and number of layers fields in the DCI (in case of codebook-based UL transmission) (and two SRIs are given by two SRS resource indication fields), the second TPMI is reserved (or the second SRI is reserved), and the first TPMI can be used to indicate a precoder to be applied to one or more layers {0...v1-1}. In addition, similarly, even if two SRIs are given by the fields of two SRS resource indications in the DCI (in case of non-codebook based UL transmission), the second SRI is reserved and the first SRI can be used to indicate the resource(s) to be associated with one or more layers {0...v1-1}.

As another example, when a value of the SRS resource set indicator field is 10 (or 11), STxMP (SDM transmission or SFN transmission) transmission may be indicated. In this case, two TPMIs are given by two precoding information and number of layers fields in the DCI (in case of codebook-based UL transmission) (and two SRIs are given by two SRS resource indication fields), and the first TPMI is used to indicate a precoder to be applied to one or more layers {0...v1-1} corresponding to the SRS resource selected by the corresponding SRI (the first SRI or the second SRI), and the second TPMI may be used to indicate a precoder to be applied to one or more layers {v1...v2+v1-1} corresponding to the SRS resource selected by the corresponding SRI (the second SRI or the first SRI) . Here, v1 and v2 may be configured/determined to different values. In addition, similarly, two SRIs are given by the fields of two SRS resource indications in the DCI (in case of non-codebook based UL transmission), the first SRI may be used to indicate the resource(s) to be associated with one or more layers {0...v1-1}, and the second SRI may be used to indicate the resource(s) to be associated with one or more layers {v1...v2+v1-1}. Here, v1 and v2 may be configured/determined to different values.

According to Alt 2 of the above agreement, a new maxRank (or Lmax) value (i.e., maxRank1 for panel 1 and maxRank2 for panel 2) is configured for each panel by RRC signaling, and for STRP (=non STxMP) transmission, a legacy maxRank value (i.e., maxRank) is configured for each panel by RRC signaling. That is, different maxRank values can be configured for each panel.

Here, different panels may be mapped to and used for different SRS resource sets or SRS resources. For example, SRS resource set 0 may be configured for antenna port indication corresponding to a first transmission panel of a UE, and SRS resource set 1 may be configured for antenna port indication corresponding to a second transmission panel of the UE.

The maxRank corresponds to a higher layer parameter/signaling for configuring a maximum transmission rank for STRP PUSCH transmission, and in case of SMxMP PUSCH transmission, maxRank1 for PUSCH transmission of panel 1 and maxRank2 for PUSCH transmission of panel 2 can be configured separately. Here, since the values of maxRank1 and maxRank2 are configured individually, they can be configured to different values. In addition, the Lmax can be given by a higher layer parameter (e.g., maxMIMO-Layers) indicating a maximum number of MIMO layers to be used for PUSCH in all BWPs of the corresponding UL of the serving cell, or by the maximum number of layers for PUSCH supported by the UE for the serving cell for non-codebook based operation.

In this situation, since the number of different maximum layers can be configured for each panel, the number of precoders/layers for each panel can also be determined differently for each panel. Accordingly, in order to support a different number of maximum layers for each panel, the number of precoders/layers for each panel is indicated by the corresponding fields in the DCI, and in order to reduce the signaling overhead of the corresponding fields in the DCI, it is required to appropriately define/configured the sizes of the corresponding fields in the DCI.

Accordingly, the present disclosure proposes a method for determining a size of a first TPMI field and a size of a second TPMI field of scheduling DCI (e.g., DCI format 0-1, 0-2) for codebook based PUSCH transmission. In addition, the present disclosure proposes a method for determining a size of a first SRI field and a size of a second SRI field of scheduling DCI for non-codebook based PUSCH transmission.

Hereinafter, in the description of the present disclosure, TPMI is given by the precoding information and number of layers field, however for the convenience of explanation, a precoding information and number of layers field is simply referred to as a TPMI field. In addition, an SRI is given by an SRS resource indicator field, but for the convenience of explanation, an SRS resource indicator field is simply referred to as an SRI field.

Embodiment 1: A size of a first (1st) TPMI field may be determined based on maxRank, and a second (2nd) TPMI may be determined based on the minimum value of maxRank1 and maxRank2 (i.e., min(maxRank1, maxRank2)).

When STRP transmission is indicated via the SRS resource set indicator field in the scheduling DCI (or when single panel transmission is indicated), the precoder and rank information applicable to the corresponding panel can always be received using the 1st TPMI field. For example, when the SRS resource set indicator field is indicated as 00 (or 01) and the 1st UL TCI state (or 2nd UL TCI state) is applied to PUSCH transmission, a UE can receive precoder and rank information using the 1st TPMI field.

Here, since maxRank (i.e., configuration for STRP transmission) is generally configured to a value greater than or equal to maxRank 1 (configuration for panel 1 of STxMP transmission) or maxRank 2 (configuration for panel 2 of STxMP transmission) (i.e., since the maximum transmission rank of each panel can be limited to 2 or less during STxMP transmission and the maximum transmission rank can be configured to 4 or less during existing STRP transmission), it is desirable to use only the 1st TPMI field when STRP transmission is indicated. If the 2nd TPMI field is used for STRP transmission, a size of the 2nd TPMI field may not be sufficient to indicate PMI for STRP transmission when maxRank > maxRank 2. Therefore, it is desirable to use only the 1st TPMI field for STRP transmission.

On the other hand, if SDM STxMP transmission is indicated via the SRS resource set indicator field in the scheduling DCI (for example, the SRS resource set indicator field is indicated as 10 (or 11)), the precoder and rank information of the panel corresponding to the minimum value of maxRank1 and maxRank2 can be received via the 2nd TPMI field, and the precoder and rank information of the remaining panels can be received via the 1st TPMI field. For example, if maxRank1 and maxRank2 are set to 1 and 2, respectively, the size of the 2nd TPMI field is determined based on the smaller value of maxRank1, and the precoder and rank of the 1st panel corresponding to maxRank1 can be indicated via the 2nd TPMI field. And, the precoder and rank of the 2nd panel corresponding to maxRank2 can be indicated via the 1st TPMI field.

As described above, since maxRank (i.e., configuration for STRP transmission) is configured to a value greater than or equal to maxRank 1 (configuration for panel 1 of STxMP transmission) and maxRank 2 (configuration for panel 2 of STxMP transmission), it can be interpreted that the size of the first (1st) TPMI field in Embodiment 1 is configured to a maximum value greater than or equal to maxRank 1 and maxRank 2. In addition, it can be interpreted that the second (2nd) TPMI is determined based on the value of either maxRank1 or maxRank2 (e.g., the minimum value).

As described above, different panels may correspond to different SRS resource sets or SRS resources, and may be indicated/configured to the UE through different SRS resource sets or SRS resources.

According to Embodiment 1, the 2nd TPMI field is configured based on the minimum value of maxRank1 and maxRank2, so there is an advantage of minimizing the 2nd TPMI field size and lowering the DCI overhead.

Embodiment 2: As in Embodiment 1, a size of the 1st TPMI field can be determined based on maxRank. On the other hand, the size of a 2nd TPMI field can be determined based on maxRank1.

If STRP transmission is indicated (or single panel transmission is indicated) through the SRS resource set indicator field in the scheduling DCI, it can operate in the same manner as embodiment 1.

When SDM STxMP transmission is indicated through the SRS resource set indicator field in the scheduling DCI, the rank (i.e., RI) and precoder (i.e., PMI) of the panel (corresponding to SRS resource set 0) corresponding to maxRank 1 may be indicated through the 2nd TPMI, and the rank (i.e., RI) and precoder (i.e., PMI) of the panel (corresponding to SRS resource set 1) corresponding to maxRank 2 may be indicated through the 1st TPMI.

As described above, since maxRank (i.e., configuration for STRP transmission) is configured to a value greater than or equal to maxRank 1 (configuration for panel 1 of STxMP transmission) and maxRank 2 (configuration for panel 2 of STxMP transmission), Embodiment 1 can be interpreted that a size of the first (1st) TPMI field is configured to a maximum value greater than or equal to maxRank 1 and maxRank 2. In addition, it can be interpreted that the second (2nd) TPMI is determined based on one of the values of maxRank1 and maxRank2 (e.g., maxrank1) .

In order for Embodiment 2 to obtain the same effect as Embodiment 1, a base station needs to always configure a value of maxRank 1 to be less than or equal to maxRank 2, and a UE can expect a value of maxRank 1 to be configured to be less than or equal to maxRank 2.

Embodiment 3: As in Embodiment 1, a size of the 1st TPMI field can be determined based on maxRank. On the other hand, a size of the 2nd TPMI field can be determined based on maxRank2.

If STRP transmission is indicated (or single panel transmission is indicated) through the SRS resource set indicator field in the scheduling DCI, it can operate in the same manner as in Embodiment 1.

When SDM STxMP transmission is indicated through the SRS resource set indicator field in the scheduling DCI, the rank (i.e., RI) and precoder (i.e., PMI) of the panel (corresponding to SRS resource set 0) corresponding to maxRank 1 may be indicated through the 1st TPMI, and the rank (i.e., RI) and precoder (i.e., PMI) of the panel (corresponding to SRS resource set 1) corresponding to maxRank 2 may be indicated through the 2nd TPMI.

As described above, since maxRank (i.e., configuration for STRP transmission) is configured to a value greater than or equal to maxRank 1 (configuration for panel 1 of STxMP transmission) and maxRank 2 (configuration for panel 2 of STxMP transmission), it can be interpreted that a size of the first (1st) TPMI field in Embodiment 1 is configured to a maximum value greater than or equal to maxRank 1 and maxRank 2. In addition, it can be interpreted that the second (2nd) TPMI is determined based on one of the values of maxRank1 and maxRank2 (e.g., maxrank2).

In order for Embodiment 3 to obtain the same effect as Embodiment 1, a base station needs to always configure a value of maxRank 2 to be less than or equal to maxRank 1, and a UE can expect a value of maxRank 2 to be configured to be less than or equal to maxRank 2.

Embodiment 4: Based on the legacy max rank and legacy codebook subset restriction (CBSR) corresponding to STRP transmission, a size of the TPMI field of STRP can be assumed as TPMI_strp. In addition, considering max rank 1, max rank 2 and CBSR1, CBSR2 corresponding to STxMP transmission, sizes of the TPMI fields for each panel can be assumed as TPMI_1, TPMI_2. In addition, a size of the final TPMI field can be determined based on max(TPMI_strp, TPMI_1 + TPMI _2).

For example, if TPMI_strp (6 bits) > TPMI_1 (3 bits) + TPMI_2 (2 bits), the size of the final TPMI field can be determined as 6 bits. In this case, the entire 6-bit TPMI field can be used when transmitting STRP. In addition, for STxMP transmission, the 6-bit TPMI field can be divided into two and used. For example, the first 3 bits can correspond to a first panel, and the remaining 3 bits can correspond to a second panel.

Here, if there are remaining code points (for example, some of the 6 bits are not used), the remaining bits may be reserved or zero padded to increase the DCI decoding probability. For example, if TPMI_strp (5 bits) < TPMI_1 (3 bits) + TPMI_2 (3 bits), the size of the final TPMI field may be determined as 6 bits. Here, if indicated by STRP transmission, for example, only 5 bits may be used. In this case, for example, 5 bits may be used in order from the most significant bit (MSB), or the remaining bits excluding the MSB may be used. In this case, the unused remaining bits may be assumed as reserved bits or may be zero padded. On the other hand, if indicated by STxMP transmission, the 6-bit TPMI field may be divided into 3 bits for each panel and used.

Embodiment 5: A size of the TPMI field can be changed not only by the maxRank value but also by the codebook subset restriction (CBSR). For example, a UL codebook (subset) can be configured to a full coherent codebook, a partial coherent codebook, a non-coherent codebook, etc. according to the CBSR. Here, the number of precoders in the codebook is in the order of full coherent > partial coherent > non-coherent codebook. In other words, a full coherent codebook includes a partial/non coherent codebook, and a partial coherent codebook includes a non coherent codebook.

Therefore, if the CBSR of the UL codebook is configured differently for each panel, the sizes of the 1st/2nd TPMI fields can be configured differently. For this purpose, the present Embodiment can be extended to other Embodiments in the present disclosure (e.g., Embodiments 1/2/3/4 and other remaining Embodiments).

That is, in Embodiments 1/2/3/4, CBSR1 and CBSR2 can be defined/indicated instead of maxRank1 and maxRank2 for the two panels.

For example, in Embodiment 1, the size of the 2nd TPMI field can be determined based on a smaller CBSR between the number of precoders of CBSR1 and the number of precoders of CBSR2. In addition, the rank (i.e., RI) and the precoder (i.e., PMI) of the panel corresponding to the smaller CBSR can be indicated through the 2nd TPMI field, and the rank (i.e., RI) and the precoder (i.e., PMI) of the remaining panels can be indicated through the 1st TPMI field. In addition, the size of the 1st TPMI field can be determined to be equal to or larger than the maximum value between the number of precoders of CBSR1 and the number of precoders of CBSR2.

In Embodiment 2, the size of the 2nd TPMI field can be determined based on the number of precoders of CBSR1. When SDM STxMP transmission is indicated through the SRS resource set indicator field in the scheduling DCI, the rank (i.e., RI) and precoder (i.e., PMI) of the panel corresponding to CBSR1 (corresponding to SRS resource set 0) can be indicated through the 2nd TPMI, and the rank (i.e., RI) and precoder (i.e., PMI) of the panel corresponding to CBSR2 (corresponding to SRS resource set 1) can be indicated through the 1st TPMI. In addition, a base station needs to always configure the number of precoders of CBSR1 to be less than or equal to the number of precoders of CBSR2, and a UE can expect that the number of precoders of CBSR1 is configured to be less than or equal to the number of precoders of CBSR2.

Similarly, Embodiment 3 can be extended and applied from the CBSR perspective instead of maxRank. In Embodiment 3, the size of the 2nd TPMI field can be determined based on the number of precoders of CBSR2. When SDM STxMP transmission is indicated through the SRS resource set indicator field in the scheduling DCI, the rank (i.e., RI) and precoder (i.e., PMI) of the panel corresponding to CBSR2 (corresponding to SRS resource set 1) can be indicated through the 2nd TPMI, and the rank (i.e., RI) and precoder (i.e., PMI) of the panel corresponding to CBSR1 (corresponding to SRS resource set 0) can be indicated through the 1st TPMI. In addition, a base station needs to always configure the number of precoders of CBSR2 to be less than or equal to the number of precoders of CBSR1, and a UE can expect that the number of precoders of CBSR2 is configured to be less than or equal to the number of precoders of CBSR1.

Embodiment 6: In case of non-codebook (NCB, Non CB) based PUSCH, precoder and rank information may be indicated using an SRI field instead of a TPMI field. In this case, a size of the SRI field may be determined through the Lmax value. That is, a size of an SRI field may be determined similarly to how a size of a TPMI field is determined using maxRank in CB PUSCH.

Therefore, in the above-described Embodiment, the method in which the sizes of the 1st TPMI field and the 2nd TPMI field are determined by configuring the maxRank, maxRank1, and maxRank2 values can be identically applied to the method in which the sizes of the 1st SRI field and the 2nd SRI field are determined by configuring the Lmax, Lmax1, and Lmax2 values. That is, the Lmax value for the existing STRP transmission can be configured by RRC signaling, and the Lmax 1 value and the Lmax2 value for each panel can be configured by RRC signaling when transmitting SDM STxMP. In this case, Embodiments 1, 2, 3, 4, and the other remaining Embodiments can be applied as follows.

For Embodiment 1, the size of the 1st SRI field is determined by the Lmax value, and the size of the 2nd SRI field can be configured based on the smaller value of Lmax1 and Lmax2. The method of Embodiment 1 can be applied in the same way to determine which SRI field to use between the 1st SRI field and the 2nd SRI field in STRP transmission. In addition, the connection relationship between each panel and the SRI field in SDM STxMP can be applied in the same way by replacing the 1st/2nd TPMI fields with the 1st/2nd SRI fields in CB PUSCH Embodiment 1.

For Embodiment 2, the size of the 1st SRI field may be determined based on the Lmax value, and the size of the 2nd SRI field may be configured based on the Lmax1 value. In this case, a base station needs to configure Lmax1 to be less than or equal to Lmax2, and a UE may expect that Lmax1 is configured to be less than or equal to Lmax2.

For Embodiment 3, the size of the 1st SRI field may be determined based on the Lmax value, and the size of the 2nd SRI field may be configured based on the Lmax2 value. In this case, a base station needs to configure Lmax2 to be less than or equal to Lmax1, and the UE may expect that Lmax2 is configured to be less than or equal to Lmax1.

In addition, in the Embodiments 1, 2, 3, and 4, which SRI field to use in STRP transmission and how to connect each panel and SRI field in SDM STxMP can be applied in the same way by replacing the 1st/2nd TPMI field with the 1st/2nd SRI field in CB PUSCH Embodiments 1, 2, and 3.

For Embodiment 4, considering Legacy Lmax corresponding to STRP transmission, the size of SRI field of STRP can be assumed as SRI_strp. In addition, considering Lmax 1 and Lmax 2 corresponding to STxMP transmission, the sizes of SRI field for each panel can be assumed as SRI_1 and SRI_2. And, the size of final SRI field can be determined based on max(SRI_strp, SRI _1 + SRI _2).

For example, if SRI_strp (6 bits) > SRI_1 (3 bits) + SRI_2 (2 bits), the size of the final SRI field can be determined as 6 bits. In this case, the entire 6 bit SRI field can be used when transmitting STRP. In addition, in the case of STxMP, the 6 bit SRI field can be divided into two and used. For example, the first 3 bits can correspond to the first panel, and the remaining 3 bits can correspond to the 2nd panel.

Here, if there is a remaining code point (for example, some bits of 6 bits are not used), the remaining bits can be reserved or zero padded to increase the DCI decoding probability. For example, if SRI_strp (5 bits) < SRI_1 (3 bits) + SRI_2 (3 bits), the size of the final SRI field can be determined as 6 bits. Here, if it is indicated as STRP, for example, only 5 bits can be used. In this case, for example, 5 bits can be used in order from MSB, or the remaining bits excluding MSB can be used. In this case, the unused remaining bits can be assumed as reserved bits or can be zero padded. On the other hand, if it is indicated as STxMP transmission, the 6-bit SRI field can be divided into 3 bits for each panel and used.

Embodiment 7: A codebook subset is reported to a base station as a UE capability, and (with reference to this) the base station can indicate the UE which CBSR to apply for the uplink transmission. In this case, according to the present Embodiment, the UE can report the codebook subset to the base station through the UE capability separately by panel or separately by mode (STxMP or non-STxMP). That is, the UE can report the codebook subset individually by panel and/or by mode (STxMP or non-STxMP) through the UE capability.

That is, if a UE has multiple Tx panels, the UE can increase the freedom in panel implementation by reporting to a base station which codebook subset can be supported for each panel. In addition, the UE can report the existing codebook subset UE capability for non-STxMP transmission and individually report the newly defined codebook subset UE capability for STxMP transmission. For example, for non STxMP, even if multiple panels are used for UL transmission, power or beam information is not configured differently for each panel, and a partial coherent or non coherent subset is reported so that different layers/layer groups are transmitted on different panels for one channel, and in STxMP, it can be reported that each panel supports a fully coherent subset.

Meanwhile, in the above-described Embodiments, maxRank1 and maxRank2 may have the same value as a special case, and may also have the same value as legacy maxRank.

Similarly, in the above-described Embodiments, CBSR1 and CBSR2 may have the same value as a special case, and may also have the same value as legacy CBSR.

Embodiment 8: Existing maxRank value can be ignored, and only maxRank1 and maxRank2 can be used. That is, a size of the 1st TPMI field can be determined based on the maximum value of maxRank1 and maxRank2 (i.e. max(maxRank1, maxRank2)), and a size of the 2nd TPMI field can be determined based on the minimum value of maxRank1 and maxRank2 (i.e. min(maxRank1, maxRank2)).

When STRP transmission is indicated via the SRS resource set indicator field in the scheduling DCI (or when single panel transmission is indicated), the precoder and rank information applied to the corresponding panel can always be received using the 1st TPMI field. For example, when the SRS resource set indicator field is indicated as 00 (or 01) and the 1st UL TCI state (or 2nd UL TCI state) is applied to PUSCH transmission, a UE can receive precoder and rank information using the 1st TPMI field.

Here, when STRP transmission is indicated, a PUSCH can be transmitted using SRS resource set 0 or SRS resource set 1. Accordingly, a size of the 1st TPMI field is configured based on the maximum value among the values of maxRank 1 and maxRank 2 configured corresponding to each SRS resource set, and the TPMI for STRP transmission can be determined using the field.

On the other hand, if SDM STxMP transmission is indicated via the SRS resource set indicator field in the scheduling DCI (for example, the SRS resource set indicator field is indicated as 10 (or 11)), the precoder and rank information of the panel corresponding to the minimum value of maxRank1 and maxRank2 can be received via the 2nd TPMI field, and the precoder and rank information of the remaining panels can be received via the 1st TPMI field. For example, if maxRank1 and maxRank2 are configured to 1 and 2, respectively, the size of the 2nd TPMI field is determined based on the smaller value of maxRank1, and the precoder and rank of the first panel corresponding to maxRank1 can be indicated via the 2nd TPMI field. And, the precoder and rank of the 2nd panel corresponding to maxRank2 can be indicated via the 1st TPMI field.

Similarly, for non-CB PUSCH, the size of the 1st SRI field may be determined based on the maximum value of Lmax1 and Lmax2 (i.e., max(Lmax1, Lmax2)), and the size of the 2nd SRI field may be determined based on the minimum value of Lmax1 and Lmax2 (i.e., min(Lmax1, Lmax2)). For other operations, the above-described operations may be applied identically by replacing the maxRank1 and the maxRank2 with Lmax1 and Lmax2, respectively.

Embodiment 9: maxRank 1, 2 can be defined decoupled from UE capability.

In case two SRI fields and/or SRS resource set indicator fields and/or two TPMI fields are configured in DCI for STxMP transmission, the sizes of the SRI fields and/or TPMI fields can be determined using new parameters instead of using the existing maxRank, Lmax, and CBSR. That is, in the case of CB PUSCH, the sizes of the two TPMI fields can be determined using maxRank 1 and maxRank 2 (and additionally using CBSR1 and CBSR2, respectively). For example, the size of the 1st TPMI field can be determined based on maxRank 1 (which the base station configures by restricting it according to the UE capability) and CBSR 1, and the size of the 2nd TPMI field can be determined based on maxRank 2 (which the base station configures by restricting it according to the UE capability) and CBSR 2. In addition, in case of non-CB PUSCH, the sizes of the two SRI fields can be determined based on Lmax 1 and Lmax 2, respectively. Here, if CBSR 1 and CBSR 2 are not defined/configured, the TPMI field sizes can be determined by (commonly) using the existing CBSR instead of CBSR 1 and CBSR 2.

A UE can report the maximum rank information (=maxRankForPUSCH) available for PUSCH transmission to a base station with the UE capability. In this case, for CB PUSCH, a UE can expect that maxRank 1 is configured to be less than or equal to the maximum rank value reported with the UE capability. Alternatively, for non-CB PUSCH, a UE can expect that Lmax 1 is configured to be less than or equal to the maximum rank value reported with the UE capability. In this case, the same effect as determining the size of the first TPMI/SRI field of Embodiments 1, 2, and 3 can be obtained.

Alternatively, for CB PUSCH, a UE may expect maxRank 2 to be configured to less than or equal to the maximum rank value reported in the UE capability. Alternatively, for non-CB PUSCH, a UE may expect Lmax 2 to be configured to less than or equal to the maximum rank value reported in the UE capability.

Alternatively, for CB PUSCH, a UE may expect maxRank 1 + maxRank 2 to be configured to less than or equal to the maximum rank value reported in the UE capability. Alternatively, for non-CB PUSCH, a UE may expect Lmax 1 + Lmax 2 to be configured to less than or equal to the maximum rank value reported in the UE capability.

In addition, a UE can report to a base station the maximum rank information available for PUSCH transmission in one panel corresponding to one SRS resource set with the UE capability. For example, the UE can separately report the maximum rank information available for PUSCH transmission in panel 1 corresponding to SRS resource set 0 (=maxRankForPanel1) and the maximum rank information available for PUSCH transmission in panel 2 corresponding to SRS resource set 1 (=maxRankForPanel2).

Here, for CB PUSCH, a UE may expect maxRank 1 to be configured less than or equal to maxRankForPanel1 and maxRank 2 to be configured less than or equal to maxRankForPanel2. Alternatively, for non-CB PUSCH, a UE may expect Lmax 1 to be configured less than or equal to maxRankForPanel1 and Lmax 2 to be configured less than or equal to maxRankForPanel2.

Alternatively, for CB PUSCH, a UE can expect maxRank 2 to be configured to min(maxRankForPanel1, maxRankForPanel2) or less. In this case, the same effect as in Embodiment 1 can be obtained. Alternatively, for non-CB PUSCH, a UE can expect Lmax 2 to be configured to min(maxRankForPanel1, maxRankForPanel2) or less.

Alternatively, for CB PUSCH, a UE may expect maxRank 2 to be configured less than or equal to maxRankForPanel1, and the UE may report maxRankForPanel1 to always be less than or equal to maxRankForPanel2. In this case, the same effect as in Embodiment 2 may be obtained. Alternatively, for non-CB PUSCH, a UE may expect Lmax 2 to be configured less than or equal to maxRankForPanel1, and the UE may report maxRankForPanel1 to always be less than or equal to maxRankForPanel2.

Alternatively, for CB PUSCH, a UE may expect maxRank 2 to be configured to maxRankForPanel2 or less, and the UE may always report maxRankForPanel2 as a value less than or equal to maxRankForPanel1. In this case, the same effect as in Embodiment 3 may be obtained. Alternatively, for non-CB PUSCH, the UE may expect Lmax 2 to be configured to maxRankForPanel2 or less, and the UE may always report maxRankForPanel2 as a value less than or equal to maxRankForPanel1.

Alternatively, for CB PUSCH, a UE may expect maxRank 1 to be configured to max(maxRankForPanel1, maxRankForPanel2) or less. In this case, the same effect as in Embodiment 8 may be obtained. Alternatively, for non-CB PUSCH, the UE may expect Lmax 1 to be configured to less than or equal to max(maxRankForPanel1, maxRankForPanel2).

The above Embodiments can be finally applied through a combination/aggregation, and accordingly, the size of the TPMI field and/or the SRI field in the DCI can be determined.

The parameters described in the above Embodiments, whether or not to apply the Embodiments, etc. can be indicated/configured by the base station to the UE, or the UE can report to the base station or be configured to a fixed value.

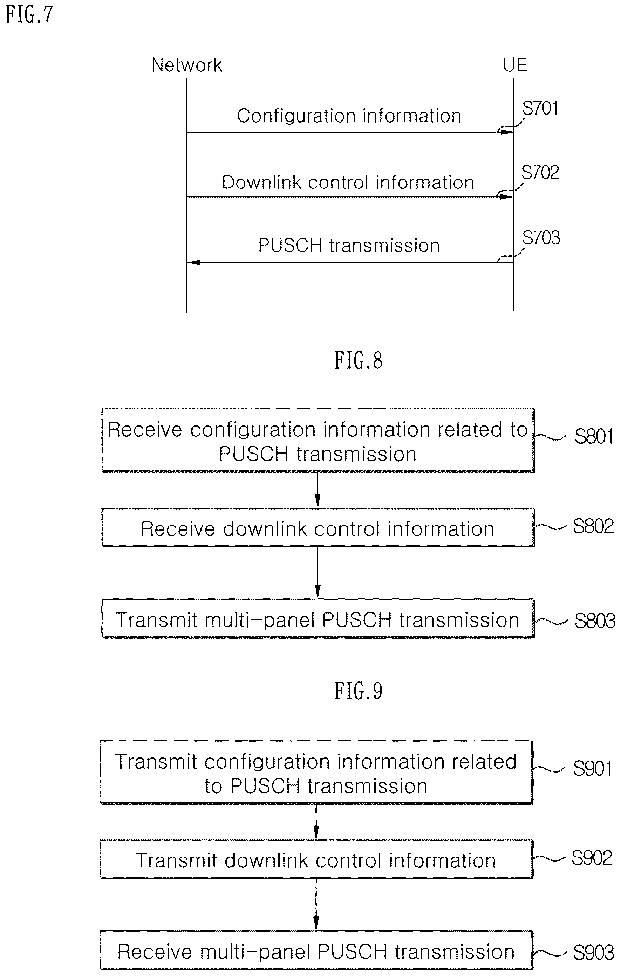

FIG. 7 illustrates a signaling procedure between a network and a UE for a PUSCH transmission and reception method according to an embodiment of the present disclosure.

FIG. 7 illustrates signaling between a network (e.g., TRP 1, TRP 2) and a UE in a situation of multiple TRPs (i.e., M-TRP, or multi-cell, all TRPs hereinafter may be replaced with cells) to which the methods proposed in the present disclosure (e.g., Embodiments 1 to 9, a combination of one or more of the proposed methods in Embodiments 1 to 9) may be applied. Here, the UE/network are only examples and may be replaced with various devices. FIG. 7 is merely for convenience of explanation and does not limit the scope of the present disclosure. In addition, some step(s) illustrated in FIG. 7 may be omitted depending on the situation and/or setting.

The signaling scheme described in FIG. 7 can be extended and applied to signaling between multiple TRPs and multiple UEs. In the following description, a network may be one base station including multiple TRPs, and may be one cell including multiple TRPs. For example, an ideal/non-ideal backhaul may be established between TRP 1 and TRP 2 constituting the network. In addition, although the following description is based on multiple TRPs, it can be equally extended and applied to transmission through multiple panels. In addition, in the present disclosure, the operation of the UE receiving a signal from TRP1/TRP2 can also be interpreted/described as (or can be an operation of) the UE receiving a signal from the network (via/using TRP1/2), and the operation of the UE transmitting a signal to TRP1/TRP2 can also be interpreted/described as (or can be an operation of) the UE transmitting a signal to the network (via/using TRP1/TRP2), and vice versa.

A base station may be a general term for an object that performs data transmission and reception with a UE. For example, the base station may be a concept including one or more TPs (Transmission Points), one or more TRPs (Transmission and Reception Points), etc. In addition, the TP and/or TRP may include a panel, a transmission and reception unit, etc. of the base station. In addition, "TRP" may be applied by replacing it with expressions such as panel, antenna array, cell (e.g., macro cell / small cell / pico cell, etc.), transmission point, base station (gNB, etc.). As described above, a TRP may be distinguished according to information (e.g., index, ID) about a CORESET group (or CORESET pool). For example, if a UE is configured to transmit and receive with multiple TRPs (or cells), this may mean that multiple CORESET groups (or CORESET pools) are configured for the UE. The configuration of such CORESET groups (or CORESET pools) may be performed via higher layer signaling (e.g., RRC signaling, etc.).

Meanwhile, although not shown in FIG. 7, for example, according to the above Embodiment 7, a UE may report UE capability information to a network via/using TRP 1 (and/or TRP 2). Here, for a UE supporting multi-panel (i.e., STxMP) PUSCH transmission, the UE capability information may include at least one of i) information for a codebook subset supported for each of the first and second panels, and ii) information for a codebook subset supported for each of the multi-panel transmission (i.e., STxMP) and non-multi-panel transmission (i.e., STRP transmission).

A UE may receive configuration information from a network via/using TRP 1 (and/or TRP 2) (S701).

The configuration information may include information related to network configuration (e.g., TRP configuration) / information related to M-TRP-based transmission and reception (e.g., resource allocation, etc.). Here, the configuration information may be transmitted through higher layer signaling (e.g., RRC signaling, MAC-CE, etc.).

In addition, for example, the configuration information may include information for configuring joint TCI and/or separate DL/UL TCI. For example, the configuration information may include a list of TCI states that provide a reference for determining an uplink transmission spatial filter of a DMRS/uplink signal (e.g., SRS) of an uplink channel (e.g., PUSCH, PUCCH).

In addition, for example, the configuration information may include information on a multi-panel (i.e., STxMP) PUSCH transmission scheme. For example, it may include information (e.g., a higher layer parameter multipanelscheme) for configuring whether to transmit multi-panel (i.e., STxMP), and through the information, whether to transmit STxMP and the STxMP transmission scheme (e.g., SDM scheme or SFN scheme) may be configured.

In addition, for example, the configuration information may include information for configuring a maximum number of layers per panel for multi-panel (i.e., STxMP) PUSCH transmission. That is, when a UE supports two panels and a multi-panel PUSCH transmission is configured through two panels, the configuration information may include first information/parameter for configuring a maximum number of layers for a first panel (e.g., a higher layer parameter maxRank1, a higher layer parameter for configuring a Lmax1 value, etc.) and second information/parameter for configuring a maximum number of layers for a second panel (e.g., a higher layer parameter maxRank2, a higher layer parameter for configuring a Lmax2 value, etc.). In addition, the configuration information may further include third information/parameter for configuring a maximum number of layers for STRP PUSCH transmission (e.g., a higher layer parameter maxRank, a higher layer parameter for setting a Lmax value, etc.). Additionally, the configuration information may further include codebook subset information for the first panel (e.g., higher layer parameter codebookSubset1) and codebook subset information for the second panel (e.g., higher layer parameter codebookSubset2).

In addition, for example, the configuration information may include information on an SRS resource set, and at least two SRS resource sets may be configured for the multi-panel PUSCH transmission. Here, as the usage for the SRS resource set is configured as 'codebook' or 'non-codebook', it may be indicated whether the PUSCH transmission scheduled by the DCI referencing the corresponding SRS resource set corresponds to a codebook-based uplink transmission or a non-codebook-based uplink transmission.

In addition, the above configuration information may include configuration information related to STRP PUSCH transmission or multi-panel (i.e., STxMP) PUSCH transmission described in the above-described proposed method (e.g., a combination of one or more of the proposed methods in Embodiments 1 to 9).

A UE receives downlink control information (DCI) from a network via/using TRP 1 (and/or TRP 2) (S702).

The DCI may be transmitted via a downlink control channel (e.g., PDCCH) and may schedule a STRP PUSCH transmission or a multi-panel (STxMP) PUSCH transmission (i.e., including a UL grant).

Additionally, the DCI may include a sounding reference signal (SRS) resource set indicator field, a first precoding-related field, and a second precoding-related field.

Here, based on the value of the SRS resource set indicator field, it can be indicated whether the PUSCH transmission scheduled by the DCI is a STRP PUSCH transmission (e.g., the value of the SRS resource set indicator field is 00 or 01) or a multi-panel (STxMP) PUSCH transmission (e.g., the value of the SRS resource set indicator field is 10 or 11).

In addition, when the PUSCH transmission is a codebook-based transmission, the first precoding-related field and the second precoding-related field may correspond to a first precoding information and number of layers field and a second precoding information and number of layers field, respectively.

In addition, when the PUSCH transmission is a non-codebook-based transmission, the first precoding-related field and the second precoding-related field may correspond to a first sounding reference signal (SRS) resource indicator field and a second SRS resource indicator field, respectively.

The first precoding-related field may indicate/determine the precoder and/or rank applied across one or more layers for the first panel, and the second precoding-related field may indicate/determine the precoder and/or rank applied across one or more layers for the second panel.

A size of the first precoding-related field may be determined to be equal to or greater than the maximum value among a value of the first information for configuring the maximum number of layers for the first panel and a value of the second information for configuring the maximum number of layers for the second panel.

For example, according to the Embodiments 1 to 3 and 6, the size of the first precoding-related field may be determined based on the value of the third information for configuring the maximum number of layers for STRP PUSCH transmission. In this case, since the value of the third information for configuring the maximum number of layers for STRP PUSCH transmission is greater than or equal to the value of the first information or the value of the second information, the size of the first precoding-related field may be configured to be greater than the maximum value among the values of the first information or the value of the second information. In other words, based on the value of the third information being greater than or equal to the value of the first information or the value of the second information, the size of the first precoding-related field may be determined based on the value of the third information.

Additionally, for example, according to the Embodiment 8, the size of the first precoding related field may be determined based on the maximum value of the value of the first information or the value of the second information.

The size of the second precoding related field may be determined based on either the value of the first information or the value of the second information. For example, according to the Embodiment 1, the size of the second precoding related field may be determined based on the minimum value of the value of the first information or the value of the second information. Alternatively, for example, according to the Embodiment 2, the size of the second precoding related field may always be determined based on the value of the first information. Alternatively, for example, according to the Embodiment 3, the size of the second precoding related field may always be determined based on the value of the second information.

In addition, according to the Embodiment 5, the sizes of the first precoding-related field and the second precoding-related field may be determined further based on the codebook subset information for the first panel and the codebook subset information for the second panel, respectively (i.e., together with a determination based on the value of the first information, the value of the second information, and/or the value of the third information).

Meanwhile, according to the above Embodiment 4, a single precoding related field is defined, and the precoder and/or a rank for STRP PUSCH transmission may be indicated/determined in the single precoding related field, and also the precoder and/or a rank for multi-panel PUSCH transmission may be indicated/determined. In this case, the size of the single precoding related field may be determined so as to support both transmission methods according to the Embodiment 4.

A UE transmits a PUSCH to a network via/using TRP 1 (and/or TRP 2) (S703).

Here, in the case of STRP PUSCH transmission, a UE may perform STRP PUSCH transmission to a network via/using a single TRP according to scheduling of DCI based on a single spatial relation RS (or UL TCI state).

Alternatively, in case of multi-panel (STxMP) PUSCH transmission, a UE may perform multi-panel (STxMP) PUSCH transmission (SDM mode or SFN mode) to the network via/using multiple TRPs using multiple panels according to the scheduling of DCI based on different spatial relationship RS (or different UL TCI states).

FIG. 8 illustrates a an operation of a UE for a PUSCH transmission and reception method according to an embodiment of the present disclosure.

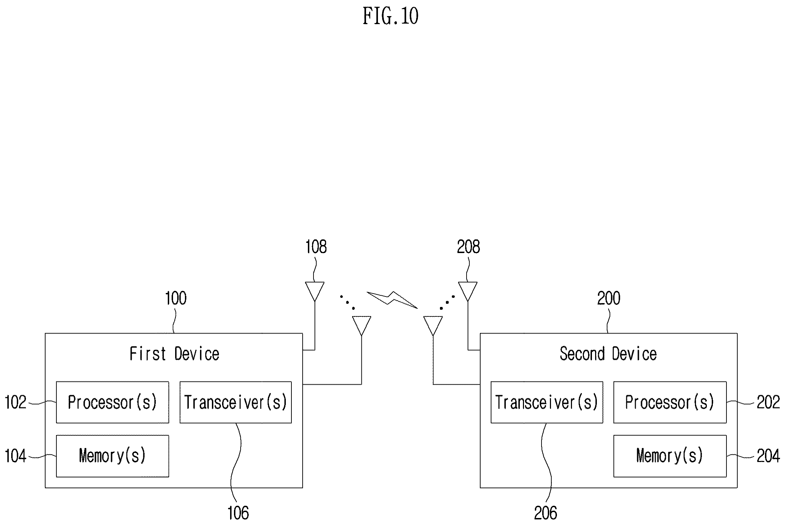

Referring to FIG. 8, FIG. 8 illustrates an operation of a UE based on the proposed methods (e.g., a combination of one or more of the proposed methods in Embodiments 1 to 9, Embodiments 1 to 9). The example of FIG. 8 is for convenience of explanation and does not limit the scope of the present disclosure. Some step(s) illustrated in FIG. 8 may be omitted depending on a situation and/or setting. In addition, the UE in FIG. 8 is only an example and may be implemented as a device illustrated in FIG. 20 below. For example, the processor (102/202) of FIG. 10 may control the transceiver (106/206) to transmit and receive channels/signals/data/information, etc., and may also control the processor (102/202) of FIG. 10 to store transmitted or received channels/signals/data/information, etc. in a memory (104/204).

In addition, the operation of FIG. 8 may be processed by one or more processors (102, 202) of FIG. 10, and the operation of FIG. 8 may be stored in a memory (e.g., one or more memories (104, 204) of FIG. 10) in the form of a command/program (e.g., an instruction, an executable code) for driving at least one processor (e.g., 102, 202) of FIG. 10.

Meanwhile, although not shown in FIG. 8, for example, according to the above Embodiment 7, a UE may report UE capability information to a base station. Here, for a UE supporting multi-panel (i.e., STxMP) PUSCH transmission, the UE capability information may include at least one of i) information for a codebook subset supported for each of the first and second panels, and ii) information for a codebook subset supported for each of the multi-panel transmission (i.e., STxMP) and non-multi-panel transmission (i.e., STRP transmission).

A UE receives configuration information related to PUSCH transmission from a base station (via/using TRP 1 and TRP 2) (S801).

The configuration information may include configuration information related to uplink PUSCH transmission (e.g., STxMP transmission) to multiple TRPs described in the above-described proposed methods (e.g., a combination of one or more of the proposed methods in Embodiments 1 to 9).

For example, the configuration information may include information on a multi-panel (i.e., STxMP) PUSCH transmission scheme. For example, it may include information (e.g., a higher layer parameter multipanelscheme) for configuring whether to transmit multi-panel (i.e., STxMP), and through the information, whether to transmit STxMP and the STxMP transmission scheme (e.g., SDM scheme or SFN scheme) may be configured.

In addition, for example, the configuration information may include information for configuring a maximum number of layers per panel for multi-panel (i.e., STxMP) PUSCH transmission. That is, when a UE supports two panels and a multi-panel PUSCH transmission is configured through two panels, the configuration information may include first information/parameter for configuring a maximum number of layers for a first panel (e.g., a higher layer parameter maxRank1, a higher layer parameter for configuring a Lmax1 value, etc.) and second information/parameter for configuring a maximum number of layers for a second panel (e.g., a higher layer parameter maxRank2, a higher layer parameter for configuring a Lmax2 value, etc.). In addition, the configuration information may further include third information/parameter for configuring a maximum number of layers for STRP PUSCH transmission (e.g., a higher layer parameter maxRank, a higher layer parameter for setting a Lmax value, etc.). Additionally, the configuration information may further include codebook subset information for the first panel (e.g., higher layer parameter codebookSubset1) and codebook subset information for the second panel (e.g., higher layer parameter codebookSubset2).

A UE receives downlink control information (DCI) from a base station (via/using TRP 1 and TRP 2) (S802).

The DCI may be transmitted via a downlink control channel (e.g., PDCCH) and may schedule a STRP PUSCH transmission or a multi-panel (STxMP) PUSCH transmission (i.e., including a UL grant).

Additionally, the DCI may include a sounding reference signal (SRS) resource set indicator field, a first precoding-related field, and a second precoding-related field.

Here, based on the value of the SRS resource set indicator field, it can be indicated whether the PUSCH transmission scheduled by the DCI is a STRP PUSCH transmission (e.g., the value of the SRS resource set indicator field is 00 or 01) or a multi-panel (STxMP) PUSCH transmission (e.g., the value of the SRS resource set indicator field is 10 or 11).

In addition, when the PUSCH transmission is a codebook-based transmission, the first precoding-related field and the second precoding-related field may correspond to a first precoding information and number of layers field and a second precoding information and number of layers field, respectively.

In addition, when the PUSCH transmission is a non-codebook-based transmission, the first precoding-related field and the second precoding-related field may correspond to a first sounding reference signal (SRS) resource indicator field and a second SRS resource indicator field, respectively.

The first precoding-related field may indicate/determine the precoder and/or rank applied across one or more layers for the first panel, and the second precoding-related field may indicate/determine the precoder and/or rank applied across one or more layers for the second panel.

A size of the first precoding-related field may be determined to be equal to or greater than the maximum value among a value of the first information for configuring the maximum number of layers for the first panel and a value of the second information for configuring the maximum number of layers for the second panel.

For example, according to the Embodiments 1 to 3 and 6, the size of the first precoding-related field may be determined based on the value of the third information for configuring the maximum number of layers for STRP PUSCH transmission. In this case, since the value of the third information for configuring the maximum number of layers for STRP PUSCH transmission is greater than or equal to the value of the first information or the value of the second information, the size of the first precoding-related field may be configured to be greater than the maximum value among the values of the first information or the value of the second information. In other words, based on the value of the third information being greater than or equal to the value of the first information or the value of the second information, the size of the first precoding-related field may be determined based on the value of the third information.

Additionally, for example, according to the Embodiment 8, the size of the first precoding related field may be determined based on the maximum value of the value of the first information or the value of the second information.

The size of the second precoding related field may be determined based on either the value of the first information or the value of the second information. For example, according to the Embodiment 1, the size of the second precoding related field may be determined based on the minimum value of the value of the first information or the value of the second information. Alternatively, for example, according to the Embodiment 2, the size of the second precoding related field may always be determined based on the value of the first information. Alternatively, for example, according to the Embodiment 3, the size of the second precoding related field may always be determined based on the value of the second information.

In addition, according to the Embodiment 5, the sizes of the first precoding-related field and the second precoding-related field may be determined further based on the codebook subset information for the first panel and the codebook subset information for the second panel, respectively (i.e., together with a determination based on the value of the first information, the value of the second information, and/or the value of the third information).

A UE transmits a multi-panel PUSCH to a base station via/using TRP 1 (and/or TRP 2) (S803).

That is, based on the value of the SRS resource set indicator field of the DCI, the UE can transmit the multi-panel PUSCH transmission to the base station.

In case of multi-panel (STxMP) PUSCH transmission, a UE may perform multi-panel (STxMP) PUSCH transmission (SDM mode or SFN mode) to the network via/using multiple TRPs using multiple panels according to the scheduling of DCI based on different spatial relationship RS (or different UL TCI states).

FIG. 9 illustrates an operation of a base station for a PUSCH transmission and reception method according to an embodiment of the present disclosure.

Referring to FIG. 9, FIG. 9 illustrates an operation of a base station based on the proposed methods (e.g., a combination of one or more of the proposed methods in Embodiments 1 to 9, Embodiments 1 to 9). The example of FIG. 9 is for convenience of explanation and does not limit the scope of the present disclosure. Some step(s) illustrated in FIG. 9 may be omitted depending on a situation and/or setting. In addition, the base station in FIG. 9 is only an example and may be implemented as a device illustrated in FIG. 10 below. For example, the processor (102/202) of FIG. 10 may control the transceiver (106/206) to transmit and receive channels/signals/data/information, etc., and may also control the processor (102/202) of FIG. 10 to store transmitted or received channels/signals/data/information, etc. in a memory (104/204) .

In addition, the operation of FIG. 9 may be processed by one or more processors (102, 202) of FIG. 10, and the operation of FIG. 9 may be stored in a memory (e.g., one or more memories (104, 204) of FIG. 10) in the form of a command/program (e.g., an instruction, an executable code) for driving at least one processor (e.g., 102, 202) of FIG. 10.

Meanwhile, although not shown in FIG. 9, for example, according to the above Embodiment 7, a base station may receive UE capability information from a UE. Here, for a UE supporting multi-panel (i.e., STxMP) PUSCH transmission, the UE capability information may include at least one of i) information for a codebook subset supported for each of the first and second panels, and ii) information for a codebook subset supported for each of the multi-panel transmission (i.e., STxMP) and non-multi-panel transmission (i.e., STRP transmission).

A base station transmits configuration information related to PUSCH transmission to a UE (via/using TRP 1 (and/or TRP 2)) (S901).

The configuration information may include configuration information related to uplink PUSCH transmission (e.g., STxMP transmission) to multiple TRPs described in the above-described proposed methods (e.g., a combination of one or more of the proposed methods in Embodiments 1 to 9).

For example, the configuration information may include information on a multi-panel (i.e., STxMP) PUSCH transmission scheme. For example, it may include information (e.g., a higher layer parameter multipanelscheme) for configuring whether to transmit multi-panel (i.e., STxMP), and through the information, whether to transmit STxMP and the STxMP transmission scheme (e.g., SDM scheme or SFN scheme) may be configured.

In addition, for example, the configuration information may include information for configuring a maximum number of layers per panel for multi-panel (i.e., STxMP) PUSCH transmission. That is, when a UE supports two panels and a multi-panel PUSCH transmission is configured through two panels, the configuration information may include first information/parameter for configuring a maximum number of layers for a first panel (e.g., a higher layer parameter maxRank1, a higher layer parameter for configuring a Lmax1 value, etc.) and second information/parameter for configuring a maximum number of layers for a second panel (e.g., a higher layer parameter maxRank2, a higher layer parameter for configuring a Lmax2 value, etc.). In addition, the configuration information may further include third information/parameter for configuring a maximum number of layers for STRP PUSCH transmission (e.g., a higher layer parameter maxRank, a higher layer parameter for setting a Lmax value, etc.). Additionally, the configuration information may further include codebook subset information for the first panel (e.g., higher layer parameter codebookSubset1) and codebook subset information for the second panel (e.g., higher layer parameter codebookSubset2).

A base station transmits downlink control information (DCI) to a UE (via/using TRP 1 and TRP 2) (S902).

The DCI may be transmitted via a downlink control channel (e.g., PDCCH) and may schedule a STRP PUSCH transmission or a multi-panel (STxMP) PUSCH transmission (i.e., including a UL grant).

Additionally, the DCI may include a sounding reference signal (SRS) resource set indicator field, a first precoding-related field, and a second precoding-related field.

Here, based on the value of the SRS resource set indicator field, it can be indicated whether the PUSCH transmission scheduled by the DCI is a STRP PUSCH transmission (e.g., the value of the SRS resource set indicator field is 00 or 01) or a multi-panel (STxMP) PUSCH transmission (e.g., the value of the SRS resource set indicator field is 10 or 11).

In addition, when the PUSCH transmission is a codebook-based transmission, the first precoding-related field and the second precoding-related field may correspond to a first precoding information and number of layers field and a second precoding information and number of layers field, respectively.

In addition, when the PUSCH transmission is a non-codebook-based transmission, the first precoding-related field and the second precoding-related field may correspond to a first sounding reference signal (SRS) resource indicator field and a second SRS resource indicator field, respectively.

The first precoding-related field may indicate/determine the precoder and/or rank applied across one or more layers for the first panel, and the second precoding-related field may indicate/determine the precoder and/or rank applied across one or more layers for the second panel.

A size of the first precoding-related field may be determined to be equal to or greater than the maximum value among a value of the first information for configuring the maximum number of layers for the first panel and a value of the second information for configuring the maximum number of layers for the second panel.

For example, according to the Embodiments 1 to 3 and 6, the size of the first precoding-related field may be determined based on the value of the third information for configuring the maximum number of layers for STRP PUSCH transmission. In this case, since the value of the third information for configuring the maximum number of layers for STRP PUSCH transmission is greater than or equal to the value of the first information or the value of the second information, the size of the first precoding-related field may be configured to be greater than the maximum value among the values of the first information or the value of the second information. In other words, based on the value of the third information being greater than or equal to the value of the first information or the value of the second information, the size of the first precoding-related field may be determined based on the value of the third information.

Additionally, for example, according to the Embodiment 8, the size of the first precoding related field may be determined based on the maximum value of the value of the first information or the value of the second information.

The size of the second precoding related field may be determined based on either the value of the first information or the value of the second information. For example, according to the Embodiment 1, the size of the second precoding related field may be determined based on the minimum value of the value of the first information or the value of the second information. Alternatively, for example, according to the Embodiment 2, the size of the second precoding related field may always be determined based on the value of the first information. Alternatively, for example, according to the Embodiment 3, the size of the second precoding related field may always be determined based on the value of the second information.

In addition, according to the Embodiment 5, the sizes of the first precoding-related field and the second precoding-related field may be determined further based on the codebook subset information for the first panel and the codebook subset information for the second panel, respectively (i.e., together with a determination based on the value of the first information, the value of the second information, and/or the value of the third information).

A base station receives a multi-panel PUSCH from a UE via/using TRP 1 (and/or TRP 2) (S903).

That is, based on the value of the SRS resource set indicator field of the DCI, the base station can receive the multi-panel PUSCH transmission from the UE.

In case of multi-panel (STxMP) PUSCH transmission, a UE may perform multi-panel (STxMP) PUSCH transmission (SDM mode or SFN mode) to the network via/using multiple TRPs using multiple panels according to the scheduling of DCI based on different spatial relationship RS (or different UL TCI states).

General Device to which the Present Disclosure may be applied

FIG. 10 is a diagram which illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR) .

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system comprising:

   receiving configuration information related to PUSCH (physical uplink shared channel) transmission from a base station, wherein the configuration information includes first information for configuring a maximum number of layers for a first panel and second information for configuring a maximum number of layers for a second panel for multi-panel PUSCH transmission;
   receiving downlink control information (DCI) from the base station, wherein the DCI includes a sounding reference signal (SRS) resource set indicator field, a first precoding-related field, and a second precoding-related field; and
   based on a value of the SRS resource set indicator field of the DCI, transmitting the multi-panel PUSCH transmission to the base station,
   wherein a size of the first precoding-related field is determined to be greater than or equal to a maximum value of a value of the first information and a value of the second information, and
   wherein a size of the second precoding-related field is determined based on either the value of the first information or the value of the second information.

2. The method of claim 1, wherein the configuration information includes third information for configuring a maximum number of layers for non-multi-panel PUSCH transmission, and
   wherein based on a value of the third information being greater than or equal to the value of the first information or the value of the second information, the size of the first precoding-related field is determined based on the value of the third information.

3. The method of claim 1, wherein the size of the second precoding-related field is determined based on a minimum value among the value of the first information or the value of the second information.

4. The method of claim 1, wherein the size of the second precoding-related field is always determined based on the value of the first information.

5. The method of claim 1, wherein the size of the second precoding-related field is always determined based on the value of the second information.

6. The method of claim 1, wherein based on the multi-panel PUSCH transmission being a codebook-based transmission, the first precoding-related field and the second precoding-related field correspond to a first precoding information and number of layers field and a second precoding information and number of layers field, respectively.

7. The method of claim 1, wherein based on the multi-panel PUSCH transmission being a non-codebook-based transmission, the first precoding-related field and the second precoding-related field correspond to a first sounding reference signal (SRS) resource indicator field and a second SRS resource indicator field, respectively.

8. The method of claim 1, wherein the configuration information further includes codebook subset information for the first panel and codebook subset information for the second panel, and
   wherein the size of the first precoding-related field and the size of the second precoding-related field are further determined based on the codebook subset information for the first panel and the codebook subset information for the second panel, respectively.

9. The method of claim 1, further comprising:

   transmitting UE capability information to the base station,
   wherein the UE capability information includes at least one of i) information on a codebook subset supported for each of the first panel and the second panel, and ii) information on a codebook subset supported for each of multi-panel transmission and non-multi-panel transmission.

10. A user equipment (UE) operating in a wireless communication system, the UE comprising:

at least one transceiver for transmitting and receiving a wireless signal; and
at least one processor for controlling the at least one transceiver,
wherein the at least one processor configured to:

receive configuration information related to PUSCH (physical uplink shared channel) transmission from a base station, wherein the configuration information includes first information for configuring a maximum number of layers for a first panel and second information for configuring a maximum number of layers for a second panel for multi-panel PUSCH transmission;
receive downlink control information (DCI) from the base station, wherein the DCI includes a sounding reference signal (SRS) resource set indicator field, a first precoding-related field, and a second precoding-related field; and
based on a value of the SRS resource set indicator field of the DCI, transmit the multi-panel PUSCH transmission to the base station,
wherein a size of the first precoding-related field is determined to be greater than or equal to a maximum value of a value of the first information and a value of the second information, and
wherein a size of the second precoding-related field is determined based on either the value of the first information or the value of the second information.

11. At least one non-transitory computer-readable medium storing at least one instruction, wherein the at least one instruction executable by at least one processor controls a user equipment (UE) to:

receive configuration information related to PUSCH (physical uplink shared channel) transmission from a base station, wherein the configuration information includes first information for configuring a maximum number of layers for a first panel and second information for configuring a maximum number of layers for a second panel for multi-panel PUSCH transmission;
receive downlink control information (DCI) from the base station, wherein the DCI includes a sounding reference signal (SRS) resource set indicator field, a first precoding-related field, and a second precoding-related field; and
based on a value of the SRS resource set indicator field of the DCI, transmit the multi-panel PUSCH transmission to the base station,
wherein a size of the first precoding-related field is determined to be greater than or equal to a maximum value of a value of the first information and a value of the second information, and
wherein a size of the second precoding-related field is determined based on either the value of the first information or the value of the second information.

12. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving configuration information related to PUSCH (physical uplink shared channel) transmission from a base station, wherein the configuration information includes first information for configuring a maximum number of layers for a first panel and second information for configuring a maximum number of layers for a second panel for multi-panel PUSCH transmission;
receiving downlink control information (DCI) from the base station, wherein the DCI includes a sounding reference signal (SRS) resource set indicator field, a first precoding-related field, and a second precoding-related field; and
based on a value of the SRS resource set indicator field of the DCI, transmitting the multi-panel PUSCH transmission to the base station,
wherein a size of the first precoding-related field is determined to be greater than or equal to a maximum value of a value of the first information and a value of the second information, and
wherein a size of the second precoding-related field is determined based on either the value of the first information or the value of the second information.

13. A method performed by a base station in a wireless communication system, the method performed by a base station comprising:

transmitting configuration information related to PUSCH (physical uplink shared channel) transmission to a user equipment (UE), wherein the configuration information includes first information for configuring a maximum number of layers for a first panel and second information for configuring a maximum number of layers for a second panel for multi-panel PUSCH transmission;

transmitting downlink control information (DCI) to the UE, wherein the DCI includes a sounding reference signal (SRS) resource set indicator field, a first precoding-related field, and a second precoding-related field; and based on a value of the SRS resource set indicator field of the DCI, receiving the multi-panel PUSCH transmission from the UE,

wherein a size of the first precoding-related field is determined to be greater than or equal to a maximum value of a value of the first information and a value of the second information, and

wherein a size of the second precoding-related field is determined based on either the value of the first information or the value of the second information.

14. A base station operating in a wireless communication system, the base station comprising:

at least one transceiver for transmitting and receiving a wireless signal; and
at least one processor for controlling the at least one transceiver,
wherein the at least one processor configured to:

transmit configuration information related to PUSCH (physical uplink shared channel) transmission to a user equipment (UE), wherein the configuration information includes first information for configuring a maximum number of layers for a first panel and second information for configuring a maximum number of layers for a second panel for multi-panel PUSCH transmission;

transmit downlink control information (DCI) to the UE, wherein the DCI includes a sounding reference signal (SRS) resource set indicator field, a first precoding-related field, and a second precoding-related field; and based on a value of the SRS resource set indicator field of the DCI, receive the multi-panel PUSCH transmission from the UE,

wherein a size of the first precoding-related field is determined to be greater than or equal to a maximum value of a value of the first information and a value of the second information, and

wherein a size of the second precoding-related field is determined based on either the value of the first information or the value of the second information.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$          $l = 14 \cdot 2^{\mu} - 1$

FIG.4

# FIG.5

Resource grid

A carrier
(up to 3300 subcarriers, i,e.,275 RBs)

A BWP

1 RB=12 subcarrier

1 RE

1 subcarrier

1 Symbol

l=0 ·····

k=0

FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601          S602          S603      S604          S605          S606          S607          S608

· DL/UL ACK/NACK
· UE CQI/PMI RI REPORT
  USING PUSCH AND PUCCH

FIG.7

Network                                                          UE

Configuration information                    S701

Downlink control information                 S702

PUSCH transmission                           S703

FIG.8

| Receive configuration information related to PUSCH transmission | S801 |

| Receive downlink control information | S802 |

| Transmit multi-panel PUSCH transmission | S803 |

FIG.9

| Transmit configuration information related to PUSCH transmission | S901 |

| Transmit downlink control information | S902 |

| Receive multi-panel PUSCH transmission | S903 |

FIG.10

EP 4 651 419 A1

## INTERNATIONAL SEARCH REPORT

| International application No. |
| --- |
| **PCT/KR2024/000497** |

| **A.** | **CLASSIFICATION OF SUBJECT MATTER** |
| --- | --- |

**H04L 5/00**(2006.01)i; **H04W 72/232**(2023.01)i; **H04B 7/0456**(2017.01)i

According to International Patent Classification (IPC) or to both national classification and IPC

| **B.** | **FIELDS SEARCHED** |
| --- | --- |

Minimum documentation searched (classification system followed by classification symbols)

H04L 5/00(2006.01); H04B 7/04(2006.01); H04B 7/0404(2017.01); H04B 7/0413(2017.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사용자 장치(UE: user equipment), PUSCH(physical uplink shared channel), 다중-패널(multi-panel), 레이어(layer), 프리코딩(precoding), 필드(field), 크기(size)

| **C.** | **DOCUMENTS CONSIDERED TO BE RELEVANT** | |
| --- | --- | --- |
| Category* | Citation of document, with indication, where appropriate, of the relevant passages | Relevant to claim No. |
| Y | WO 2022-238868 A1 (GUANGDONG OPPO MOBILE TELECOMMUNICATIONS CORP., LTD.) 17 November 2022 (2022-11-17)<br>See paragraphs [0019], [0025] and [0030]; and claims 2, 4, 6, 10-11 and 17. | 1-14 |
| Y | KR 10-2020-0127053 A (LG ELECTRONICS INC.) 09 November 2020 (2020-11-09)<br>See paragraph [0009]; and claims 1-3 and 14. | 1-14 |
| Y | KR 10-2022-0146580 A (LG ELECTRONICS INC.) 01 November 2022 (2022-11-01)<br>See paragraph [0293]. | 6 |
| A | US 2022-0353886 A1 (GUANGDONG OPPO MOBILE TELECOMMUNICATIONS CORP., LTD.) 03 November 2022 (2022-11-03)<br>See paragraphs [0004]-[0047]; and claims 1-7. | 1-14 |
| A | KR 10-2021-0083845 A (SAMSUNG ELECTRONICS CO., LTD.) 07 July 2021 (2021-07-07)<br>See paragraphs [0009]-[0010]; and claims 1-2. | 1-14 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 April 2024** | **24 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/000497**

| Patent document cited in search report | | | Publication date (day/month/year) | Patent family member(s) | | | Publication date (day/month/year) |
|---|---|---|---|---|---|---|---|
| WO | 2022-238868 | A1 | 17 November 2022 | CN | 117223371 | A | 12 December 2023 |
| | | | | US | 2024-0063977 | A1 | 22 February 2024 |
| KR | 10-2020-0127053 | A | 09 November 2020 | CN | 110168947 | A | 23 August 2019 |
| | | | | CN | 110168947 | B | 27 August 2021 |
| | | | | EP | 3480966 | A1 | 08 May 2019 |
| | | | | EP | 3480966 | B1 | 05 May 2021 |
| | | | | EP | 3883139 | A1 | 22 September 2021 |
| | | | | KR | 10-2019-0029722 | A | 20 March 2019 |
| | | | | KR | 10-2174831 | B1 | 05 November 2020 |
| | | | | US | 10516514 | B2 | 24 December 2019 |
| | | | | US | 10911195 | B2 | 02 February 2021 |
| | | | | US | 10965418 | B2 | 30 March 2021 |
| | | | | US | 2019-0207731 | A1 | 04 July 2019 |
| | | | | US | 2019-0379501 | A1 | 12 December 2019 |
| | | | | US | 2020-0213054 | A1 | 02 July 2020 |
| | | | | WO | 2018-128504 | A1 | 12 July 2018 |
| KR | 10-2022-0146580 | A | 01 November 2022 | CN | 115485983 | A | 16 December 2022 |
| | | | | EP | 4113854 | A1 | 04 January 2023 |
| | | | | JP | 2023-522649 | A | 31 May 2023 |
| | | | | US | 11800555 | B2 | 24 October 2023 |
| | | | | US | 2023-0061346 | A1 | 02 March 2023 |
| | | | | US | 2024-0032088 | A1 | 25 January 2024 |
| | | | | WO | 2021-221476 | A1 | 04 November 2021 |
| US | 2022-0353886 | A1 | 03 November 2022 | AU | 2017-445393 | A1 | 13 August 2020 |
| | | | | CN | 111512582 | A | 07 August 2020 |
| | | | | EP | 3731446 | A1 | 28 October 2020 |
| | | | | EP | 3731446 | B1 | 09 August 2023 |
| | | | | JP | 2021-513757 | A | 27 May 2021 |
| | | | | KR | 10-2020-0104378 | A | 03 September 2020 |
| | | | | US | 11412531 | B2 | 09 August 2022 |
| | | | | US | 11849446 | B2 | 19 December 2023 |
| | | | | US | 2020-0329487 | A1 | 15 October 2020 |
| | | | | WO | 2019-127199 | A1 | 04 July 2019 |
| KR | 10-2021-0083845 | A | 07 July 2021 | US | 2023-0029850 | A1 | 02 February 2023 |
| | | | | WO | 2021-133121 | A1 | 01 July 2021 |

Form PCT/ISA/210 (patent family annex) (July 2022)